# EUROPÄISCHE PATENTSCHRIFT

(11) **EP 1 313 998 B1**
(45) Veröffentlichungstag und Bekanntmachung des Hinweises auf die Patenterteilung: **28.09.2005**
(21) Anmeldenummer: 01971751.1
(22) Anmeldetag: 05.07.2001
(51) Int. Cl.: G01B 3/00, G01D 5/38

(54) **LÄNGEN- ODER WINKELMESSGERÄT MIT DIFFERENTIALSCHRAUBE ZUR MOIRE-EINSTELLUNG**
LENGTH OR ANGLE MEASURING APPARATUS WITH DIFFERENTIAL SCREW FOR MOIRE ADJUSTMENT
APPAREIL DE MESURE D'ANGLE OU DE LONGUEUR COMPORTANT UNE VIS DIFFERENTIELLE POUR LE REGLAGE DE MOIRE

(30) Priorität: 24.08.2000 DE 10041692
(43) Veröffentlichungstag der Anmeldung: 28.05.2003
(73) Patentinhaber: Dr. Johannes Heidenhain GmbH, 83292 Traunreut (DE)
(72) Erfinder: TONDORF, Sebastian, 83329 Waging am See (DE)
(86) Internationale Anmeldenummer: PCT/EP2001/007696
(87) Internationale Veröffentlichungsnummer: WO 2002/016862

(56) Entgegenhaltungen:
- EP-A- 0 441 125
- DE-A- 1 639 199
- DE-A- 1 764 815
- DE-A- 19 748 802
- US-A- 4 273 447
- US-A- 4 972 599

## Beschreibung

Die Erfindung betrifft ein Längen- oder Winkelmeßgerät gemäß dem Oberbegriff des Anspruches 1. Derartige Meßgeräte werden vor allem zur Bestimmung der relativen Verschiebung oder absoluten Position von beweglichen Maschinenteilen, z.B. bei Werkzeug- oder Meßmaschinen, eingesetzt.

In Längen- und Winkelmeßgeräten der genannten Art wird eine Maßverkörperung z.B. in Form eines optischen Gitters von einem Sensor abgetastet, der hinter einer Abtastplatte in Form eines weiteren Gitters angebracht ist. Eine genaue Justierung des Winkels zwischen den beiden Gittern ist dabei notwendig, um den bei zueinander verkippten Gittern entstehenden Moire-Effekt zu vermeiden, indem die beiden Gitter parallel gestellt werden, bzw. um einen Moiré-Effekt absichtlich zu erzeugen, indem ein bestimmter Winkel genau eingestellt wird. Sind auf der Maßverkörperung mehrere Spuren aufgebracht, wirken sich zu große Winkelfehler so aus, daß der Bezug der Spuren untereinander verloren geht. Eine Referenzmarke kann dann unter Umständen nicht mehr der richtigen Periode einer Inkrementalteilung zugeordnet werden.

Zur Einstellung des Moiré-Winkels zwischen der Maßverkörperung eines Maßstabes und der Abtastplatte einer Abtasteinheit wird gemäß der DE 2844066 ein Hebelarm vorgeschlagen, der auf der einen Seite über ein Biegegelenk am beweglichen oder festen Maschinenteil befestigt ist, auf der anderen Seite eine Verstellschraube aufweist, die sich an diesem Maschinenteil abstützt, und der den Abtastkopf mit Abtastplatte trägt. Eine Verstellung der Schraube bewirkt so eine Verschwenkung des Hebelarmes mit Abtasteinheit und damit eine Verstellung des Moiré-Winkels.

Nachteilig an dieser Anordnung ist, daß sie keine feinfühlige Justierung des Moiré-Winkels erlaubt. Bei einer typischen Hebelarmlänge von 50mm und einer Verstellschraube mit einer Gewindesteigung von 0,8mm ergibt sich eine Winkeländerung von 16mrad für eine Umdrehung der Schraube. Außerdem ist in dieser Anordnung der Hebelarm nur in einer Richtung gegen Vibrationen geschützt. Die Abtasteinheit muß daher durch eine zusätzliche Klemmschraube gesichert werden.

Bekannt ist es, als Feineinstellgetriebe ein Zweifachschraubengetriebe mit einer Differentialschraube zu verwenden, wie es etwa bei S. Hildebrand: Feinmechanische Bauelemente, Hanser Verlag, München Wien 1978, 3. Auflage, S534-S536 beschrieben ist. Ein Zweifachschraubengetriebe erlaubt eine feinfühlige Justierung in linearer Richtung, da die Abstandsänderung zweier mit der Differentialschraube verbundener Objekte bei einer Schraubenumdrehung gerade der Differenz der beiden Gewindesteigungen der Differentialschraube entspricht.

Aufgabe der Erfindung ist es daher, ein Längen- oder Winkelmeßgerät anzugeben, das eine feinfühlige Justierung des Moiré-Winkels erlaubt, eine vibrationsarme Befestigung der Abtasteinheit gestattet und dabei mit wenigen Bauteilen auskommt.

Die Aufgabe wird gelöst durch eine Vorrichtung mit den Merkmalen des Anspruches 1. Vorteilhafte Ausführungsformen ergeben sich aus den Maßnahmen, die in den abhängigen Ansprüchen aufgeführt sind.

So wird nun die Verstellung eines Hebels, der über ein Biegegelenk am festen oder beweglichen Maschinenteil befestigt ist, dadurch ermöglicht, daß statt einer gewöhnlichen, an diesem Maschinenteil aufliegenden Schraube eine Differentialschraube vorgesehen ist, die mit ihrem ersten Gewinde mit dem Hebel verschraubt ist und mit ihrem zweiten Gewinde mit diesem Maschinenteil verschraubt ist. Dreht man nun die Schraube um eine Umdrehung, ändert sich der Abstand des Hebelendes zu diesem Maschinenteil gerade um die Differenz der Gewindesteigungen, wenn der Richtungssinn der Gewinde gleich ist. Der Hebel ändert dadurch seine Neigung, da er eine Drehbewegung um das Biegegelenk ausführt. Im oben erwähnten Beispiel ergibt sich mit Gewindesteigungen von 0,7mm und 0,8mm eine Abstandsänderung von 0,1mm für eine Umdrehung der Differentialschraube, und damit eine Winkeländerung von ca. 2mrad. Die Justierung kann also deutlich feinfühliger erfolgen als zuvor. Da die doppelte Verschraubung nun vor Vibrationen in zwei Richtungen schützt, kann eine zusätzliche Klemmung des Hebels entfallen. Zusätzlich ist die Differentialschraube durch die axialen Kräfte, die bei der Verformung des Biegegelenkes entstehen, vorgespannt. Durch die gegenseitige Verkippung der beiden Bohrlöcher der Differentialschraube wird diese außerdem geklemmt; sie ist damit also selbstsichernd verschraubt.

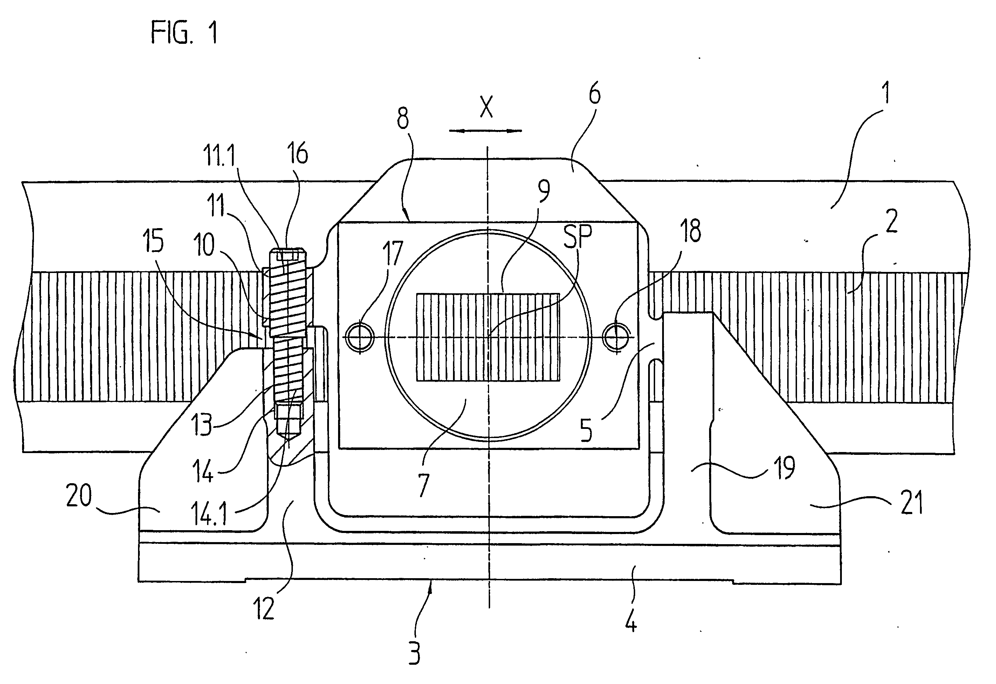

Weitere Vorteile sowie Einzelheiten der vorliegenden Erfindung ergeben sich aus der nachfolgenden Beschreibung der Figur 1, in der eine erfindungsgemäße Ausführung einer Vorrichtung zur Justage eines Abtastkopfes gezeigt ist.

In Figur 1 erkennt man einen Maßstab 1 mit einer Maßverkörperung 2 in Form einer Inkrementalteilung. Der Maßstab 1 sei im Beispiel fest mit der (nicht gezeichneten) Maschine verbunden. Eine Justiervorrichtung 3 ist mit einem (ebenfalls nicht gezeichneten) längs der Meßrichtung X beweglichen Teil der Maschine verbunden.

Die Justiervorrichtung 3 ist aus einem Stück gefertigt und besteht aus einem Sockel 4, an dem von einem Biegegelenk 5 ein Hebel in Form einer Halterung 6 schwenkbar gehalten wird. Dabei erlaubt das als Steg zwischen Sockel 4 und Halterung 6 ausgebildete Biegegelenk 5 eine Verdrehung der Halterung 6 um eine Achse senkrecht zur Ebene der Maßverkörperung 2.

Die Halterung 6 weist eine Öffnung 7 zur Aufnahme der Abtasteinheit 8 auf. Die Abtasteinheit 8 enthält eine Abtastplatte 9, deren Ausrichtung bezüglich der Maßverkörperung 2 eingestellt werden muß, um z.B. Moiré-Effekte zu vermeiden bzw. solche Effekte im gewünschten Maß zu erzielen. Ein nicht gezeichneter Sensor sitzt hinter der Abtastplatte 9, oder der Sensor selbst ist so strukturiert, daß er die Funktion der Abtastplatte 9 erfüllt.

Die Halterung 6 weist an der dem Biegegelenk 5 gegenüberliegenden Seite eine Bohrung 10 mit Innengewinde 11 auf. Weiter erkennt man am Sockel 4 einen Arm 12, der eine Bohrung 13 mit Innengewinde 14 trägt, so daß Bohrung 10 und Bohrung 13 auf einer gemeinsamen Achse liegen. Zwischen der Halterung 6 und dem Sockel 4 bleibt ein Spalt 15, der der Halterung 6 eine Verkippung um das Biegegelenk 5 erlaubt. Bohrung 10 weist nun einen Durchmesser auf, der größer ist als der Durchmesser der Bohrung 13. Dies erlaubt bei der Montage der Differentialschraube 16 ein einfaches Durchstecken und Verschrauben. Es sind aber auch Lösungen mit gleichen Durchmessern denkbar.

Die Steigung von Innengewinde 11 ist größer als die Steigung von Innengewinde 14. Eine Differentialschraube 16 weist in einer Hälfte ein Gewinde 11.1 mit einer Gewindesteigung und einem Durchmesser passend zu Innengewinde 11 auf, in der anderen Hälfte ein Gewinde 14.1 mit einer Gewindesteigung und einem Durchmesser passend zu Innengewinde 14.

Die Differentialschraube 16 wird noch vor der Montage der Abtasteinheit 8 mit Sockel 4 und Halterung 6 verschraubt, um das Biegegelenk 5 vorzuspannen. Durch die unterschiedlichen Steigungen der Innengewinde 11 und 14 wird dabei der Spalt 15 vergrößert oder verkleinert, je nach Richtungssinn der Innengewinde 11 und 14 und Drehrichtung der Differentialschraube 16. In diesem Zustand kann dann die Abtasteinheit 8 an die Halterung 6 montiert und nach einer groben Justierung an den Bohrungen 17 und 18 verschraubt werden. Durch Drehung der Differentialschraube 16 kann nun der Winkel zwischen der Abtastplatte 9 und der Maßverkörperung 2 durch Verdrehung der Halterung 6 um das Biegegelenk 5 verstellt werden.

Die Breite des Spaltes 15 ändert sich zwischen den Bohrungen 10 und 13 bei einer Umdrehung der Differentialschraube 16 gerade um die Differenz der Steigungen der Innengewinde 11 und 14, die Justierung kann also besonders feinfühlig erfolgen.

Da sich durch die beidseitige Verschraubung mittels der Differentialschraube 16 die Halterung 6 in Richtung der Bohrungen 10 und 13 nicht mehr bewegen kann, treten keine Vibrationen in dieser Richtung mehr auf. Das Biegegelenk 5 ist blockiert, eine zusätzlich Klemmschraube ist nicht mehr nötig.

Ordnet man außerdem, wie gezeigt, das Biegegelenk 5 so an, daß es mit dem gemeinsamen Schwerpunkt SP von Abtasteinheit 8 und Halterung 6 auf einer Achse parallel zur Meßrichtung X liegt, tritt bei Beschleunigung der Justiervorrichtung 3 in Meßrichtung X kein Drehmoment bezüglich der oben definierten Drehachse des Biegegelenkes 5 auf. Dies trägt weiter zur Stabilität der Anordnung bei.

Eine weitere Versteifung der Justiervorrichtung ergibt sich, wenn die Arme 12 und 19 des Sockels 4 durch Rippen 20 und 21 verstärkt werden, die in Meßrichtung X und senkrecht zum Maßstab 1 verlaufen.

Das beschriebene Prinzip zur Justierung von Abtasteinheiten läßt sich vorteilhaft nicht nur in auf optischer Abtastung beruhenden Längen- und Winkelmeßgeräten verwenden. Der Einsatz ist auch in anderen Systemen denkbar, die z.B. auf magnetischen Maßverkörperungen beruhen und über Magnetoresistive Sensoren oder Hall-Sensoren abgetastet werden; ebenso sind kapazitive oder induktive Sensoren mit entsprechenden Maßverkörperungen denkbar.

## Patentansprüche

1. Längen- oder Winkelmeßgerät mit einer Maßverkörperung (2) und einer dieser gegenüberliegenden Abtasteinheit (8), sowie mit einer Justiervorrichtung (3), bestehend aus einem Sockel (4) und einer über ein Biegegelenk (5) mit dem Sockel (4) verbundenen, die Abtasteinheit (8) tragenden Halterung (6), **dadurch gekennzeichnet, daß** diese Justiervorrichtung (3) eine Differentialschraube (16) mit zwei Gewinden (11.1, 14.1) verschiedener Steigung enthält, die mit ihrem ersten Gewinde (11.1) mit der Halterung (6) verschraubt ist und die mit ihrem zweiten Gewinde (14.1) mit dem Sockel (4) verschraubt ist, und daß das Biegegelenk (5) und der gemeinsame Schwerpunkt (SP) von Abtasteinheit (8) und Halterung (6) auf einer Achse parallel zur Meßrichtung (X) liegen.

2. Längen- oder Winkelmeßgerät nach Anspruch 1, **dadurch gekennzeichnet, daß** der Sockel (4), das Biegegelenk (5) und die Halterung (6) aus einem Stück gefertigt sind.

3. Längen- oder Winkelmeßgerät nach einem der vorhergehenden Ansprüche, **dadurch gekennzeichnet, daß** Arme (12, 19) des Sockels (4) durch Rippen (20, 21) versteift sind.

4. Längen- oder Winkelmeßgerät nach einem der vorhergehenden Ansprüche, **dadurch gekennzeichnet, daß** die Gewinde (11.1, 14.1) der Differentialschraube (16) unterschiedliche Durchmesser aufweisen.

5. Längen- oder Winkelmeßgerät nach einem der vorhergehenden Ansprüche, **dadurch gekennzeichnet, daß** die Differentialschraube (16) durch die gegenseitige Verkippung von Bohrungen (10, 13) zur Aufnahme der Differentialschraube (16) um das Biegegelenk (5) selbstsichernd geklemmt wird.

## Claims

1. Length or angle measuring apparatus having a material measure (2) and a scanning unit (8) lying opposite said measure, as well as an adjustment device (3), comprising a base (4) and a mounting support (6) which bears the scanning unit (8) and is connected via a flector joint (5) to the base (4), **characterised in that** this adjustment device (3) contains a differential screw (16) having two threads .(11.1, 14.1) of differing pitch, this screw being screwed by its first thread (11.1) to the mounting support (6) and by its second thread (14.1) to the base (4), and **in that** the flector joint (5) and the common centre of mass (SP) of scanning unit (8) and mounting support (6) lie on an axis which is parallel to the measuring direction (X).

2. Length or angle measuring apparatus according to claim 1, **characterised in that** the base (4), the flector joint (5) and the mounting support (6) are produced from one piece.

3. Length or angle measuring apparatus according to one of the preceding claims, **characterised in that** arms (12, 19) of the base (4) are reinforced by ribs (20, 21).

4. Length or angle measuring apparatus according to one of the preceding claims, **characterised in that** the threads (11.1, 14.1) of the differential screw (16) have different diameters.

5. Length or angle measuring apparatus according to one of the preceding claims, **characterised in that** the differential screw (16) is clamped in a self-locking manner by the mutual tilting about the flector joint (5) of bores (10, 13) for receiving the differential screw (16).

## Revendications

1. Dispositif de mesure de longueurs ou d'angles comprenant une règle de mesure (2) et une unité de palpage (8) située en vis-à-vis de celle-ci, ainsi qu'un moyen de réglage (3) constitué d'un socle (4) et d'un support (6) portant l'unité de palpage (8) et lié au socle (4) par l'intermédiaire d'un joint articulé de flexion (5), **caractérisé en ce que** ledit moyen de réglage (3) comporte une vis différentielle (16) à deux filets (11.1, 14.1) de pas différents, dont le premier filet (11.1) est vissé au support (6) et le deuxième filet (14.1) est vissé au socle (4), et **en ce que** le joint articulé de flexion (5) et le centre de gravité (SP) commun de l'unité de palpage (8) et du support (6) se situent sur un axe qui est parallèle à la direction de mesure (X).

2. Dispositif de mesure de longueurs ou d'angles selon la revendication 1, **caractérisé en ce que** le socle (4), le joint articulé de flexion (5) et le support (6) sont réalisés d'une seule pièce.

3. Dispositif de mesure de longueurs ou d'angles selon une des revendications précédentes, **caractérisé en ce que** des bras (12, 19) du socle (4) sont rigidifiés par des pattes (20, 21).

4. Dispositif de mesure de longueurs ou d'angles selon une des revendications précédentes, **caractérisé en ce que** les filets (11.1, 14.1) de la vis différentielle (16) présentent des diamètres différents.

5. Dispositif de mesure de longueurs ou d'angles selon une des revendications précédentes, **caractérisé en ce que** la vis différentielle (16) est bloquée de manière indesserrable par l'inclinaison réciproque de trous (10, 13), destinés à recevoir la vis différentielle (16), autour du joint articulé de flexion (5).
